# EUROPÄISCHE PATENTANMELDUNG

(11) **EP 1 103 175 A2**
(43) Veröffentlichungstag der Anmeldung: **30.05.2001**
(21) Anmeldenummer: 00102906.5
(22) Anmeldetag: 12.02.2000
(51) Int. Cl.: A01D 87/12, A01F 29/00

(54) **Vorrichtung zum Abrollen und/oder Transportieren von Rundballen**

(30) Priorität: 17.11.1999 DE 19955458; 29.01.2000 DE 10003952; 03.02.2000 DE 10004749
(71) Anmelder: Fischer, Werner, 95695 Mähring (DE)
(72) Erfinder: Fischer, Werner, 95695 Mähring (DE)
(74) Vertreter: Graf, Helmut, Dipl.-Ing.

(57) **Zusammenfassung**

Eine Vorrichtung (1,1a,1b) zum Transport und/oder Abrollen von Rundballen (2), insbesondere aus aufgerollten Stroh-, Heu- und Silagelagen besteht aus einem verfahrbaren Vorrichtungsrahmen (3) oder -Gestell mit höhenbeweglichen Ausleger (6). Dieser besitzt an zwei voneinander beabstandeten Auslegerelementen (9,10) jeweils einen Halter mit wenigstens einem Dorn (11,15) zum Halten eines Rundballens an seinen beiden Stirnseiten durch Aufspießen.

## Beschreibung

Die Erfindung bezieht sich auf eine Vorrichtung gemäß Oberbegriff Patentanspruch 1, 2 oder 3.

In der Landwirtschaft werden zur Ernte beispielsweise von Heu und Stroh zunehmend Erntemaschinen eingesetzt, die aus dem geernteten Heu oder Stroh sogenannte Rundballen formen, welche ähnlich einem Teppich aufgerollt und abtransportiert werden können. Bei der weiteren Verwendung, beispielsweise zur Versorgung von Ställen oder für Futterzwecke werden derartige Rundballen dann an dem jeweiligen Verwendungsort transportiert und dort abgerollt.

Bekannt ist für diesen Transport und das Abrollen bereits eine Vorrichtung (DE 195 10 327), die zwei einen Winkel miteinander einschließende Stützfläche bildet, auf die der jeweilige Rundballen aufgelegt werden kann. Eine dieser Stützflächen ist von umlaufend antreibbaren Transportketten gebildet, so daß beim Einschalten eines entsprechenden Antriebs der auf der Vorrichtung aufliegende Rundballen abgewickelt bzw. abgerollt wird.

Bei einer ähnlichen, bekannten Vorrichtung (DE 35 16 861), die allerdings nur ein Abrollen des jeweiligen Rundballens ermöglicht und für eine ortsfeste Anordnung bestimmt ist, wird die Auflage für den jeweiligen Rundballen von mehreren, motorisch angetriebene Walzen gebildet.

Bekannt ist weiterhin eine Vorrichtung gemäß Oberbegriff Patentanspruch 1 oder Patentanspruch 3 (FR 2 591 962). Bei dieser bekannten Vorrichtung sind die Auslegerelemente, an denen die Halter vorgesehen sind, für die Relativbewegung der Halter um eine Achse schwenkbar vorgesehen, die senkrecht zur ersten Achsrichtung, d.h. senkrecht zur Achse der Dorne liegt. Dies bedeutet, daß beim Greifen eines Rundballens die Dorne nicht axial in den Rundballen hineinbewegt werden, sondern sich auf einer Kreisbahn bewegen. Dies hat erhebliche Nachteile, da die Struktur des Rundballens beim Hineinbewegen der Dorne stark verändert wird, d.h. das Material des Rundballens stark aufgelockert wird, was insbesondere dann nachteilig ist, wenn die Dorne zur Erhöhung der Stabilität eine größere axiale Länge aufweisen.

Nachteilig ist bei dieser bekannten Vorrichtung auch, daß die formschlüssige Verbindung zwischen dem jeweiligen, angetriebenen Halter und den Rundballen durch mehrere gegenüber der Drehachse des Halters radial versetzte Dorne erreicht wird. Dies bedeutet, daß es praktisch nicht möglich ist, den jeweiligen Rundballen vollständig abzurollen. Vielmehr verbleibt jeweils ein beachtlicher, nicht mehr abrollbarer Rest zwischen den beiden Haltern.

Aufgabe der Erfindung ist es, eine Vorrichtung aufzuzeigen, die die Nachteile des Standes der Technik vermeidet und eine verbesserte Handhabung von Rundballen ermöglicht.

Zur Lösung dieser Aufgabe ist eine Vorrichtung entsprechend dem Patentanspruch 1, 2 oder 3 ausgebildet.

Bei einer bevorzugten Ausführung der Erfindung ist wenigstens ein Dorn zumindest eines Halters spreitzbar ausgebildet, so daß nach dem Greifen des jeweiligen Rundballens durch Spreitzen des Dornes eine formschlüssige Verbindung zwischen dem Halter und dem Rundballen hergestellt ist, und zwar ohne zusätzliche Hilfsdorne usw. Dies ermöglicht ein vollständiges oder nahezu vollständiges Abrollen des Rundballens.

Gemäße einem anderen Aspekt erfolgt die Relativbewegung zwischen den Haltern derart, daß sich die Dorne parallel zu ihrer Dornachse, also axial bewegen und nicht unter einer Schwenkbewegung in das Material des jeweiligen Randballens eingreifen, so daß selbst bei einer größeren Dornlänge eine Zerstörung der Struktur des Materials des Rundballens, d.h. insbesondere eine Auflockerung des Materials nicht erfolgt.

Die erfindungsgemäße Vorrichtung ermöglicht es, den jeweiligen Rundballen durch Schließen des Auslegers mit den an den Auslegerelementen vorgesehenen Halterungen an seinen beiden Stirnseiten zu fassen und zu halten, so daß der Rundballen dann durch Anheben des Auslegers an dem jeweiligen Ort, beispielsweise am Feld oder am späteren Lagerort angehoben und an einem weiteren Ort, beispielsweise vom Feld an dem Lagerplatz oder vom Lagerplatz an den Verwendungsort bewegt werden kann. Am Verwendungsort ist dann durch den Antrieb wenigstens eines Halters ein Abrollen des Rundballens möglich.

Die erfindungsgemäße Vorrichtung ist beispielsweise als Arbeitsgerät zur Verwendung bei einem landwirtschaftlichen Fahrzeug oder Schlepper ausgebildet und kann zu diesem Zweck an einem am Schlepper vorgesehenen Geräteträger befestigt werden.

Grundsätzlich besteht aber auch die Möglichkeit, die Vorrichtung fahrbar mit eigenen Rädern auszugestalten, beispielsweise als einachsiger oder mehrachsiger Anhänger, der an ein landwirtschaftliches Fahrzeug der eine landwirtschaftliche Zugmaschine angekoppelt werden kann.

Das Schneid- und/oder Klemmelement ist beispielsweise ein Balken oder eine Welle ist, der bzw. die mit der Balken- oder Wellen-Längserstreckung parallel oder im wesentlichen parallel zur Achse der Dorne liegt, oder das Schneid- und/oder Klemmelement ist ein walzen- oder trommelartiges Element, das mit seiner Längserstreckung parallel oder im wesentlichen parallel zur Achse der Dorne liegt. Am Schneid- und/oder Klemmelement z.B. wenigstens eine Schneide vorgesehen, vorzugsweise aber mehrere Schneiden in Längsrichtung aufeinander folgend. Das Schneid- oder Klemmelement ist z.B. durch einen Antrieb um seine Längsachse umlaufend antreibbar, und zwar vorzugsweise durch einen Pneumatik- oder Hydraulik-Antrieb.

Weiterbildungen der Erfindung sind Gegenstand der Unteransprüche. Die Erfindung wird im Folgenden anhand der Figuren an Ausführungsbeispielen näher erläutert. Es zeigen:
- Fig. 1: in vereinfachter Darstellung und in Draufsicht eine Vorrichtung gemäß der Erfindung;
- Fig. 2: und 3 die Vorrichtung der Figur 1 in Seitenansicht bzw. Frontansicht;
- Fig 4: in verfeinfachter Darstellung und in Draufsicht die beiden Halter bei einer weiteren Ausführungsform der Erfindung;
- Fig. 5: den Halter der Figur 4 in Seitenansicht;
- Fig. 6: in einer Darstellung ähnlich Figur 2 eine weitere mögliche Ausführungsform der erfindungsgemäßen Vorrichtung;
- Fig. 7: ' in vereinfachter Darstellung eine Draufsicht auf den Schneid- und/oder Klemmbalken der Vorrichtung der Figur 6.

Die in den Figuren dargestellte und allgemein mit 1 bezeichnete Vorrichtung dient insbesondere in landwirtschaftlichen Betrieben zum Transport und Abrollen von Rundballen 2, wie sie von modernen Erntemaschinen erzeugt werden. Diese Rundballen bestehen beispielsweise aus einer gepreßten Lage Heu oder Stroh, die (Lage) dann ähnlich einem Teppich zu dem jeweiligen Rundballen 2 aufgewickelt werden.

Die Rundballen 2 werden von der jeweiligen Erntemaschine beispielsweise auf dem abgeernteten Feld abgelegt und müssen dann z.B. zum Trocknen und für die weitere Verwendung an einem geeigneten Lagerplatz transportiert werden. Für die weitere Verwendung, d.h. für Futterzwecke oder zur Besorgung von Stallungen werden die gelagerten Rundballen 2 an dem jeweiligen Verwendungsort transportiert und dort abgerollt. Diese Arbeiten sind besonders einfach und zeitsparend mit der Vorrichtung 1 möglich.

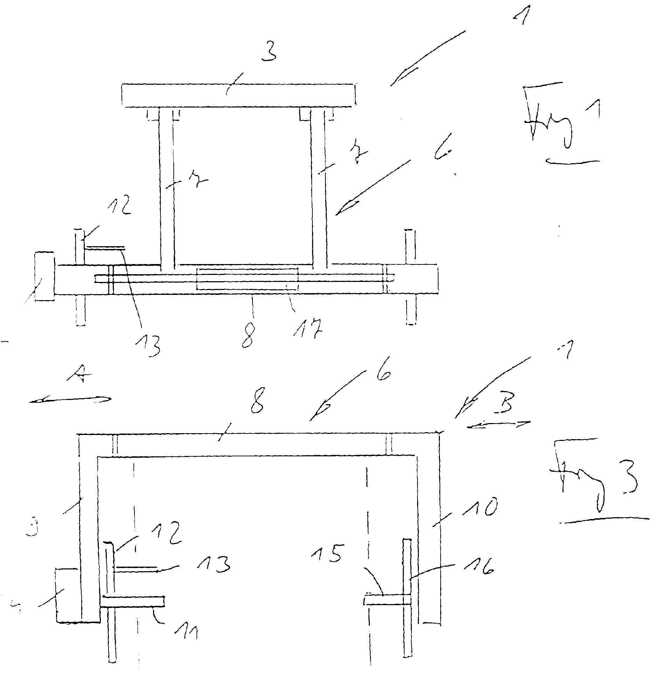

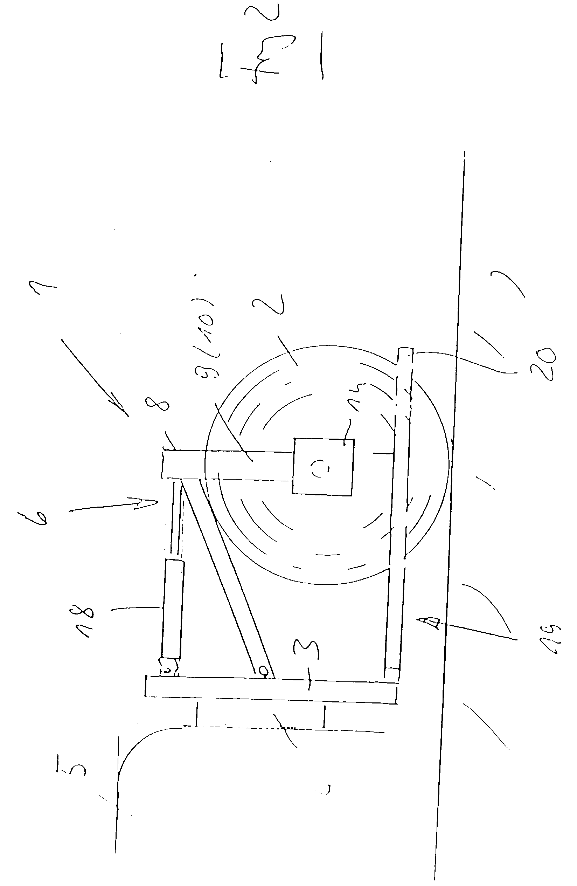

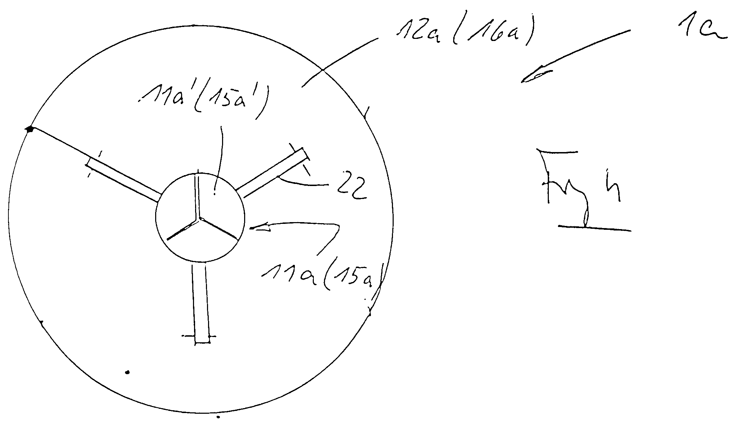

Diese besteht im wesentlichen aus einem Tragrahmen 3, der beispielsweise an dem Geräteträger 4 an der Vorderseite eines nur schematisch dargestellten Schleppers 5 befestigt werden kann. Am Tragrahmen 3 ist um eine Achse, die bei im Einsatz befindlicher Vorrichtung 1 eine horizontale und quer zur Schlepperlängsachse angeordnete Achse ist, ein Ausleger 6 schwenkbar vorgesehen, der über den Tragrahmen 3 nach vorne wegsteht. Dieser Ausleger 6 ist von zwei Lenker 7 gebildet, die jeweils mit einem Ende am Tragrahmen 3 um die genannte Achse schwenkbar befestigt sind und an ihrem anderen Ende mit einem Querholm 8 verbunden sind. Dieser Querholm 8 liegt mit seiner Längserstreckung parallel zur Schwenkachse des Auslegers 6 und damit senkrecht zur Längserstreckung der Lenker 7. An den beiden Enden des Querholmes 8 ist jeweils ein vom Querholm 8 nach unten wegstehender Arm 9 bzw. 10 vorgesehen, und zwar um einen vorgegebenen Hub in Querholmlängsrichtung verschiebbar, wie dies in der Figur 3 mit dem Doppelpfeil A für den Arm 9 und mit dem Doppelpfeil B für den Arm 10 angegeben ist.

An dem unteren, freien, dem Querholm 8 entferntliegenden Ende ist am Arm 9 ein Dorn 11 drehbar gelagert, der über die dem Arm 10 zugewandte Innenseite des Armes 9 wegsteht und in der Nähe dieser Innenseite eine Scheibe 12 aufweist. Diese ist drehfest mit dem Dorn 11 verbunden und trägt radial gegenüber dem Dorn 11 versetzt mehrere parallel zum Dorn 11 orientierte Hilfsdorne 13. Der Dorn 11 mit der Scheibe 12 und den Hilfsdornen 13 ist durch einen Antrieb 14 um die Achse des Dornes 11 rotierend antreibbar.

An dem freien Ende des Armes 10 ist ein weiterer Dorn 15 frei drehbar gelagert, der über die dem Arm 9 zugewandte Innenseite des Armes 10 wegsteht und in der Nähe der Innenseite 10 mit einer Platte oder Scheibe 16 versehen ist. Durch eine motorische Stelleinrichtung 17 sind die beiden Arme 9 und 10 gegenläufig aus einer Stellung, in der diese Arme den größten Abstand voneinander aufweisen und die der geöffneten Stellung des Auslegers 6 entspricht, in eine Stellung bewegbar, in der die Arme 9 und 10 den geringsten Abstand voneinander aufweisen und die im geschlossenen Zustand des Auslegers 6 entspricht. Diese Bewegung erfolgt dabei durch Verschieben der Arme 9 und 10 radial zu ihrer Längserstreckung in der Achsrichtung A, d.h. auch die Dorne 11, 13 und 15 werden in Richtung ihrer Achse auf einander zu und von einander weg bewegt.

Eine weitere Stelleinrichtung 18 wirkt zwischen dem Tragrahmen 3 und dem Querholm 8, so daß durch entsprechende Ansteuerung der Stelleinrichtung 18 der Ausleger 6 angehoben und abgesenkt werden kann.

Am Tragrahmen 3 ist bei der dargestellten Ausführungsform weiterhin eine Führungsund Fixiergabel 19 vorgesehen, die zwei Gabelarme 20 aufweisen, die sich von dem Tragrahmen 3 in einer Achsrichtung senkrecht zur Schwenkachse des Auslegers 6 wegerstecken und deren gegenseitiger Abstand in etwa der axialen Länge der Rundballen 2 entspricht.

Der Antrieb 14 ist beispielsweise ein Antrieb mit einem Hydraulik-Motor. Die Stelleinrichtungen 17 und 18 werden beispielsweise von Hydraulik-Zylindern gebildet. Die Ansteuerung dieser Elemente erfolgt von der am Schlepper 5 vorgesehenen Hydraulik über eine entsprechende Steuerventileinrichtung die z.B. am Tragrahmen 3 vorgesehen ist.

### Die Arbeitsweise der Vorrichtung läßt sich, wie folgt, beschreiben:

Zum Transportieren der von einer Erntemaschine abgegebenen Rundballen 2 an dem Lagerort wird die an dem Schlepper 5 befestigte Vorrichtung derart an den jeweiligen Rundballen heranbewegt, daß dieser zwischen den beiden Armen 20 der Fixiergabel 19 aufgenommen ist und mit seiner Achse in etwa senkrecht zur Längserstreckung der Arme 20 liegt, wobei sich der Ausleger in der geöffneten Stellung befindet, in der die beiden achsgleich miteinander angeordneten Dorne 11 und 15 einen Abstand voneinander aufweisen, der größer ist als die axiale Länge des jeweiligen Rundballens 2.

In einem nächsten Arbeitsschritt wird die Stelleinrichtung 17 so betätigt, daß sich die beiden Arme 9 und 10 aufeinander zubewegen, die Dorne 11 und 15 sowie die Hilfsdorne 13 jeweils an den Stirnseiten des Rundballens 2 in diesen eindringen, wobei die Lage des Auslegers 6 derart ist, daß die Dorne 11 und 15 beim Eindringen in etwa achsgleich mit der Mittelachse des Rundballens 2 liegen. In einem nächsten Schritt wird durch Betätigen der Stelleinrichtung 18 der Ausleger 6 angehoben und mit diesem auch der zwischen den Armen 9 und 10 bzw. den Scheiben 12 und 16 an den Dornen 11, 13 und 15 gehaltene Rundballen 2. In diesem angehobenen Zustand kann der Rundballen 2 dann an den jeweiligen Lagerort mit dem Schlepper verbracht werden. Dort wird der Rundballen 2 durch entsprechendes Schwenken des Auslegers 6 abgelegt und durch Öffnen des Auslegers 6 (Auseinanderbewegen der Arme 9 und 10 durch die Stelleinrichtung 17) freigegeben.

Für die Verwendung eines Rundballes 2 wird dieser in gleicher Weise von der Vorrichtung 1 zwischen den Armen 9 und 10 aufgenommen, mit dem Schlepper 5 an den Verwendungsort verbracht, wo dann bei weiterhin am Ausleger 6 gehaltenem und vom Untergrund beabstandeten Rundballen 2 durch Einschalten des Antriebs 14 der Rundballen 2 abgerollt wird.

Ein besonderer Vorteil der Vorrichtung 1 besteht u.a. darin, daß diese Vorrichtung sowohl zum Transport von Rundballen, also auch zum Abwickeln von Rundballen verwendet werden kann.

Die Vorrichtung eignet sich weiterhin auch zum Stapeln der Rundballen 2 für die Lagerung. Weiterhin kann die Vorrichtung auch zusammen mit einer weiteren Einrichtung verwendet werden, die beim Abrollen zugleich eine Auflockerung des Materials des Rundballens 2 bewirkt.

So ist es beispielsweise auch möglich, den Ausleger 6 so auszubilden, daß nur eine der beiden Arme 9 oder 10 an der Quertraverse 8 in Quertraversenlängsrichtung verschiebbar vorgesehen ist, während der andere Arm fest mit dem betreffenden Ende der Quertraverse verbunden ist.

Weiterhin besteht selbstverständlich auch die Möglichkeit, die Vorrichtung bzw. den Tragrahmen 3 so auszuführen, daß dieser an der Heckseite des jeweiligen landwirtschaftlichen Fahrzeugs befestigt werden kann.

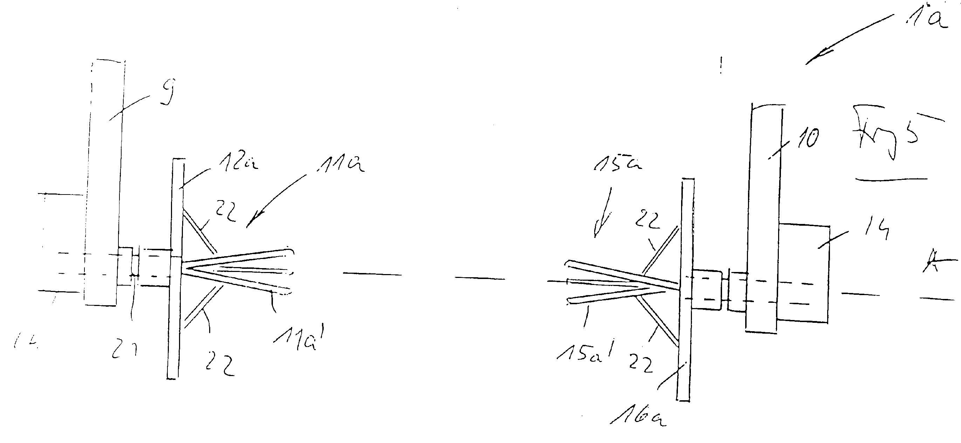

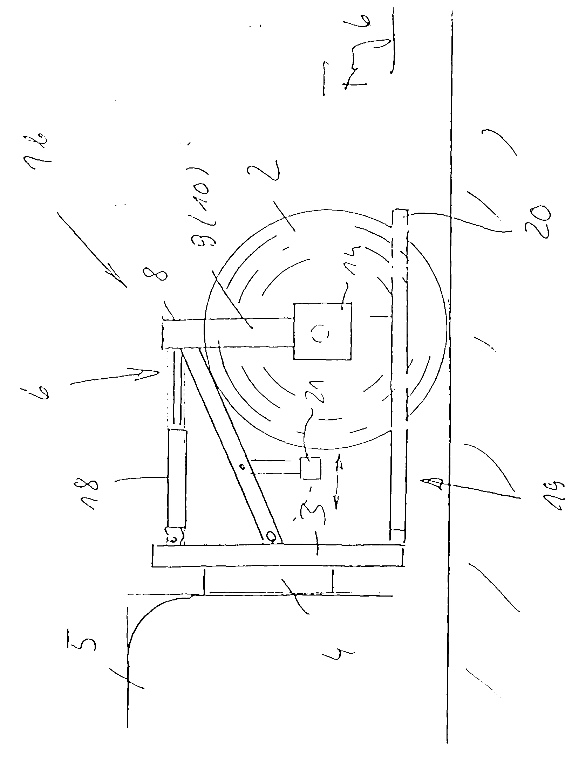

Die Figuren 4 und 5 zeigen in Draufsicht, d.h. in Blickrichtung die Achse A sowie in Seitenansicht die Halter einer Vorrichtung 1a. Jeder Halter besitzt wiederum den Dorn 11a bzw. 15a, der von seiner Funktion her grundsätzlich dem Dorn 11 bzw. 15 entspricht. Weiterhin besitzt jeder Halter der Vorrichtung 1 a die Abstützscheibe 12a bzw. 16a, die in ihrer grundlegenden Funktion der Scheibe 12 bzw. 16 entspricht. Beide Halter der Vorrichtung 1 a sind durch den Antrieb 14 um die Achse des jeweiligen Dornes 11a bzw. 15a antreibbar und an dem jeweiligen Arm 9 bzw. 10 vorgesehen, die in der Figur 5 nur teilweise dargestellt sind.

Zum Öffnen und Schließen des die Arme 9 und 10 aufweisenden Auslegers 6 sind die beiden Arme 9 und 10 auch bei dieser Ausführungsform wieder radial zu ihrer Längserstreckung in Richtung der Achse A aufeinander zu und voneinander wegbewegbar, und zwar durch die Stelleinrichtung 17 in der Weise, daß die mit ihrer Achse in der Achse A liegende Dorne 11a und 15a in dieser Achse aufeinander zu und voneinander wegbewegt werden.

Eine Besonderheit besteht darin, daß die Dorne 11 a und 15a spreizbar sind. Hierfür besteht jeder Dorn aus mehreren, d.h. bei der dargestellten Ausführungsform jeweils aus drei Dornelementen 11 a' bzw. 15a', die an ihrem der jeweiligen Scheibe 12a bzw. 16a benachbarten Ende schwenkbar an der die Dorne und die betreffende Scheibe tragenden Welle 21 des zugehörigen Antriebs 14 vorgesehen sind, und zwar um Achsen, die tangential zu einer gedachten Kreislinie um die Achse der Welle 21 und damit um die Mittelachse des jeweiligen Dornes 11a bzw. 15a liegt. Durch einen Mechanismus oder Antrieb werden die Dornelemente 11a bzw. 15a spätestens dann, wenn der jeweilige Dorn 1 a bzw. 15a nach dem Schließen des Auslegers 6 in den betreffenden Rundballen 2 eingeführt ist, auseinandergespreizt, so daß hierdurch eine formschlüssige Verbindung über die gespreizten Dorne zwischen dem Rundballen und den jeweiligen Antrieb 14 besteht.

Das Spreitzen der Dorne 11a und 15a kann auf verschiedenste Weise erfolgen, und zwar beispielsweise durch einen entsprechenden Antrieb, beispielsweise Hydraulik-Zylinder, oder aber auf rein mechanischem Wege dadurch, daß die Scheiben 12a und 16a axial verschiebbar auf der jeweiligen Welle 21 vorgesehen und die Dornelemente 11a' bzw. 1 5a' jeweils über einen Hilfslenker 22 mit der zugehörigen Scheibe 12a bzw. 16a gelenkig verbunden sind, so daß beim Schließen des Auslegers 6a durch die gegen die Stirnseiten des Ballens 2 zur Anlage kommenden Scheiben und durch ein axiales Verschieben dieser Scheiben auf den Wellen 21 das Spreitzen der Dorne 11a und 15 erfolgt.

Die Vorrichtung 1a hat zusätzlich zu den vorstehend zur Vorrichtung 1 genannten Vorteilen u.a. auch noch den Vorteil, daß durch die spreizbaren Dorne 11a und 15a auf Hilfsdorne 13 verzichtet werden kann und insbesondere auch ein vollständiges Abwickeln des Rundballens 2 bis auf den kleinsten Durchmesser möglich ist, und zwar ungestört durch Hilfsdorne usw. Da die Dorne 11a und 15a in Richtung ihrer Achse aufeinander zu und voneinander wegbewegt werden, ist auch bei der Vorrichtung 1a gewährleistet, daß der jeweilige Rundballen 2 optimal, d.h. mit seiner Ballenachse parallel oder in etwa parallel zur Achse der Dorne am Ausleger 6 gelagert ist und somit ein optimales Abrollen des Rundballens 2 möglich ist. Das Öffnen und Schließen des Auslegers 6 durch Bewegen der Dorne 11a und 15a in Richtung ihrer Achse hat weiterhin auch den Vorteil, daß die Struktur des Rundballens 2 beim Eindringen der Dorne so gering, wie nur irgendwie möglich gestört wird, insbesondere auch kein Auflockern des Materials des Rundballen 2 erfolgt und somit die formschlüssige Verbindung durch Spreitzen optimal erreicht wird.

Das Bewegen der Halter in Richtung der Achse der Dorne hat weiterhin auch den Vorteil, daß Dorne mit einer großen axialen Länge verwendet werden können und es schließlich auch möglich ist, die Stabilität des Rundballen 2, die mit zunehmenden Abwickeln dieses Rundballens nachläßt, durch Aufeinanderzubwegen der Dorne 11a und 15a zu verbessern.

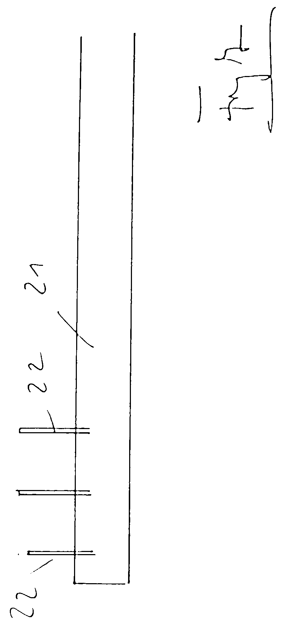

Die in den Figuren 6 und 7 dargestellte Vorrichtung 1b entspricht wiederum im wesentlichen der Vorrichtung 1 der Figuren 1 - 3, wobei aber bevorzugt die Spreit z-Dorne 11a und 15a der Figur 1a zur Anwendung kommen. Die Besonderheit der Vorrichtung 1b besteht darin, daß am Rahmen bzw. Ausleger und dabei beispielsweise am Lenker 7 ein Balken 21 vorgesehen ist, der mit seiner Längserstreckung parallel zur gemeinsamen Achse der Dorne 11a und 15a liegt und radial zu seiner Längsachse auf den zwischen den Dornen gehaltenen Wallen 2 zustellbar ist. Die Länge des Balkens 21 ist dabei gleich oder geringfügig größer als die maximal mögliche axiale Länge der Rundballen 2.

Das Zustellen des Balkens 21, d.h. das Bewegen dieses Balkens aus einer Ausgangsstellung, in der der Balken 21 vom Umfang des Rundballens 2 beabstandet ist, in eine Arbeitsstellung, in der der Balken 21 gegen den zwischen den Dornen 11a und 15a gehaltenen Rundballen 2 anliegt, sowie das Bewegen des Balkens 21 zurück in die Ausgangsstellung erfolgt durch eine nicht dargestellte Stelleinrichtung, vorzugsweise durch wenigstens einen Zylinder, beispielsweise Hydraulik- oder Pneumatik-Zylinder. Bei gegen den Rundballen 2 fest angedrücktem Balken 21 ist der Rundballen 2 gegen Drehen fixiert, so daß auf diese Weise durch Weiterbewegen der Vorrichtung 1b eine von einem Rundballen 2 abgewickelte und auf einem Untergrund aufliegende Länge von dem restlichen, zwischen den Dornen 11a und 15a gehaltenen Rundballen 2 durch Abreißen abgetrennt werden kann.

Bei der dargestellten Ausführungsform weist der Balken 21 an seiner dem Rundballen 2 zugewandten Seite eine Vielzahl von Messerschneiden 22 auf. Mit diesen Messerschneiden ist es möglich, bei nur leicht gegen den Rundballen 2 anliegendem Balken 21 oder bei geringfügig von dem Rundballen 2 beabstandeten Balken 21 und bei durch den Antrieb 14 angetriebenen Dornen 11a und 15a den Rundballen 2 bzw. dessen Material zunehmend zu zerkleinern. Grunsätzlich besteht auch die Möglichkeit, daß der Balken 21 durch einen Antrieb um seine Längsachse antreibbar ist, so daß dieser Balken mit den Messern bzw. Schneiden 22 dann als Fräse wirkt.

Bei der vorstehenden Beschreibung wurde davon ausgegangen, daß die Vorrichtung 1, 1a bzw. 1b als Arbeitsgerät an dem Schlepper 5 bzw. an dem dortigen Geräteträger 4 befestigt wird. Grundsätzlich besteht aber auch die Möglichkeit, diese Vorrichtung mit eigenen Rädern einachsig oder mehrachsig auszubilden, so daß diese Vorrichtung dann beispielsweise als Anhänger an einem Schlepper angekoppelt werden kann.

### Bezugszeichenliste

- 1, 1a, 1b: Vorrichtung
- 2: Rundballen
- 3: Tragrahmen
- 4: Geräteträger
- 5: landwirtschaftliche Zugmaschine bzw. Schlepper
- 6: Ausleger
- 7: Lenker
- 8: Traverse
- 9, 10: Arm
- 11, 11a: Dorn
- 12: Scheibe
- 13: Hilfsdorn
- 14: Antrieb
- 15, 15a: Dorn
- 16: Scheibe
- 17, 18: Stelleinrichtung bzw. Hydraulikzylinder
- 19: Ausricht- oder Fixiergabel
- 20: Gabelarm
- 21: Balken
- 22: Schneidmesser

## Patentansprüche

1. Vorrichtung zum Transport und/oder Abrollen von Rundballen (2), die insbesondere aus aufgerollten Stroh-, Heu- und Silagelagen bestehen, mit einem an einem verfahrbaren Vorrichtungsrahmen oder -Gestell (3) befestigbaren, höhenbeweglichen Ausleger (6), der an zwei voneinander beabstandeten Auslergerelementen (9, 10) jeweils einen Halter mit wenigstens einem Dorn (11, 15, 11a, 15a) zum Halten eines Rundballens (2) an seinen beiden Stirnseiten durch Aufspießen aufweist, wobei die beiden Halter, die in einer ersten Achsrichtung voneinander beabstandet sind, durch eine erste Stelleinrichtung (17) relativ zueinander wegbewegbar sind, und zwar aufeinander zu und voneinander weg, und wobei wenigstens einer der beiden Halter, beispielsweise beide Halter um eine Achse parallel zur ersten Achsrichtung durch einen Antrieb (14) antreibbar ist, **dadurch gekennzeichnet,** daß zumindest der Dorn (11a, 15a) des einen Halters spreizbar ist.

2. Vorrichtung zum Transport und/oder Abrollen von Rundballen (2), die insbesondere aus aufgerollten Stroh-, Heu- und Silagelagen bestehen, mit einem an einem verfahrbaren Vorrichtungsrahmen oder -Gestell (3) befestigbaren, höhenbeweglichen Ausleger (6), der an zwei voneinander beabstandeten Auslergerelementen (9, 10) jeweils einen Halter mit wenigstens einem Dorn (11, 15, 11a, 15a) zum Halten eines Rundballens (2) an seinen beiden Stirnseiten durch Aufspießen aufweist, wobei die beiden Halter, die in einer ersten Achsrichtung voneinander beabstandet sind, durch eine erste Stelleinrichtung (17) relativ zueinander wegbewegbar sind, und zwar aufeinander zu und voneinander weg, und wobei wenigstens einer der beiden Halter, beispielsweise beide Halter um eine Achse parallel zur ersten Achsrichtung durch einen Antrieb (14) antreibbar ist, **dadurch gekennzeichnet,** daß die Halter in der ersten Achsrichtung (A) bzw. in der Achse ihrer Dorne aufeinander zu und voneinander weg bewegbar sind.

3. Vorrichtung zum Transport und/oder Abrollen von Rundballen, die insbesondere aus aufgerollten Stroh-, Heu- und/oder Silagelagen bestehen, mit einem an einem verfahrbaren Vorrichtungsrahmen oder Gestell (3) befestigbaren höhenbeweglichen Ausleger (6), der an zwei voneinander beabstandeten Auslegerelementen (9, 10) jeweils einen Halter mit wenigstens einem Dorn (11, 15'; 11a, 15a) zum Halten des Rundballens (2) an seinen beiden Stirnseiten durch Aufspießen aufweist, wobei die beiden Halter, die in einer ersten Achsrichtung voneinander beabstandet sind, durch eine Stelleinrichtung (17) relativ zueinander bewegbar sind, und zwar aufeinander zu und voneinander weg, und wobei wenigstens einer der beiden Halter, beispielsweise beide Halter um eine Achse parallel zur ersten Achsrichtung durch einen Antrieb (14) antreibbar ist, **gekennzeichnet** durch wenigstens eine Fräse und/oder ein Schneid- und/oder Klemmelement (21), welche bzw. welches auf den zwischen den Haltern gehaltenen Rundballen (2) zustellbar und von diesem wegbewegbar ist.

4. Vorrichtung nach einem der vorhergehenden Ansprüche, dadurch gekennzeichnet, daß die Halter in der ersten Achsrichtung (A) bzw. in der Achse ihrer Dorne aufeinander zu und voneinander weg bewegbar und/oder daß zumindest der Dorn (11a, 15a) des einen Halters, beispielsweise die Dorne (11a, 15a) beider Halter spreizbar ist.

5. Vorrichtung nach einem der vorhergehenden Ansprüche, dadurch gekennzeichnet, daß die Dorne an einander zugewandten Seiten von Ballen-Auslegerelementen (9, 10) des jeweiligen Halters vorgesehen sind.

6. Vorrichtung nach einem der vorhergehenden Ansprüche, dadurch gekennzeichnet, daß die Dorne (11a, 15a) zum Spreitzen aus wenigstens zwei relativ zueinander bewegbaren Dornelementen (11a', 15a') bestehen, wobei das Spreitzen der Dorne (11a, 15a) beispielsweise durch ein Antrieb erfolgt.

7. Vorrichtung nach einem der vorhergehenden Ansprüche, dadurch gekennzeichnet,
daß der wenigstens eine Halter ein Abstützelement (12a, 16a) aufweist, welches relativ zum Dorn (11a, 15a) bewegbar ist und hierbei ein Spreitzen des Dornes bewirkt,
und/oder
daß wenigstens ein Auslegerelement (9, 10) in der ersten Achsrichtung (A) relativ zum anderen Auslegerelement verschiebbar vorgesehen ist,
und/oder
daß der Ausleger (6) durch eine zweite Stelleinrichtung (18) um eine Achse parallel zur ersten Achsrichtung schwenkbar ist;
und/oder
daß an jedem Halter ein Abstützelement, vorzugsweise eine Abstützscheibe (12, 16) für den Rundballen (2) vorgesehen ist,
und/oder
daß die Auslegerelemente Arme (9, 10) sind,
und/oder
daß beide Auslegerelemente an einem quer verlaufenden Auslegerelement oder Querträger (8) beweglich vorgesehen sind,
und/oder
daß an einem Tragrahmen (3) der Ausleger (6) schwenkbar gehalten ist.

8. Vorrichtung nach einem der vorhergehenden Ansprüche, gekennzeichnet durch eine Fixier- oder Ausrichtgabel (19) am Tragrahmen (3).

9. Vorrichtung nach einem der vorhergehenden Ansprüche, gekennzeichnet durch ihre Ausbildung als Arbeitsgerät zum Befestigen an einem Geräteträger (4) eines landwirtschaftlichen Fahrzeugs.

10. Vorrichtung nach einem der vorhergehenden Ansprüche, gekennzeichnet durch ihre Ausbildung als Fahrzeug oder Fahrrahmen.

11. Vorrichtung nach einem der vorhergehenden Ansprüche, dadurch gekennzeichnet, daß das Schneid- und/oder Klemmelement ein Balken (21) oder eine Welle ist, der bzw. die mit der Balken- oder Wellen-Längserstreckung parallel oder im wesentlichen parallel zur Achse der Dorne (11, 15; 1 1a, 15a) liegt.

12. Vorrichtung nach einem der vorhergehenden Ansprüche, dadurch gekennzeichnet, daß das Schneid- und/oder Klemmelement ein walzen- oder trommelartiges Element ist, das mit seiner Längserstreckung parallel oder im wesentlichen parallel zur Achse der Dorne (11, 15; 1 1a, 15a) liegt.

13. Vorrichtung nach einem der vorhergehenden Ansprüche, dadurch gekennzeichnet, daß am Schneid- und/oder Klemmelement (21) wenigstens eine Schneide (22) vorgesehen ist.

14. Vorrichtung nach Anspruch 22, dadurch gekennzeichnet, daß am Schneid-und/oder Klemmelement (21) mehrere Schneiden in Längsrichtung aufeinander folgende vorgesehen sind.

15. Vorrichtung nach einem der vorhergehenden Ansprüche, dadurch gekennzeichnet, das Schneid- oder Klemmelement (21) durch einen Antrieb um seine Längsachse umlaufend antreibbar ist.

16. Vorrichtung nach einem der vorhergehenden Ansprüche, dadurch gekennzeichnet, daß der Antrieb für das Schneid- oder Klemmelement (21) ein Pneumatik- oder Hydraulik- Antrieb ist.
